# EUROPÄISCHE PATENTSCHRIFT

(11) **EP 3 039 965 B1**
(45) Veröffentlichungstag und Bekanntmachung des Hinweises auf die Patenterteilung: **02.12.2020**
(21) Anmeldenummer: 15198610.6
(22) Anmeldetag: 09.12.2015
(51) Int. Cl.: A01M 29/30

(54) **SPERRVORRICHTUNG, INSBESONDERE ZUR ABWEHR VON MAULWÜRFEN, UND VERWENDUNG UND VERFAHREN ZU IHRER VERLEGUNG**
BLOCKING DEVICE, IN PARTICULAR FOR REPELLING MOLES, AND USE OF AND METHOD FOR LAYING IT
DISPOSITIF DE BLOCAGE, EN PARTICULIER DESTINÉ À REPOUSSER LES TAUPES, SON UTILISATION ET SON PROCÉDÉ DE POSE

(30) Priorität: 30.12.2014 DE 102014119730
(43) Veröffentlichungstag der Anmeldung: 06.07.2016
(73) Patentinhaber: Ley, Uwe, 42113 Wuppertal (DE)
(72) Erfinder: Ley, Uwe, 42113 Wuppertal (DE)
(74) Vertreter: Brötz, Helmut

(56) Entgegenhaltungen:
- DE-A1- 19 941 277
- US-A- 4 596 731
- US-A- 5 528 855
- US-A1- 2011 214 338

## Beschreibung

Die vorliegende Erfindung betrifft eine Sperrvorrichtung, insbesondere zur Abwehr von Maulwürfen im Erdboden. Insofern könnte man die Sperrvorrichtung auch als Maulwurfsperre bezeichnen. Die Sperrvorrichtung umfasst zumindest ein Gitter, welches Gitteröffnungen berandende Gitterstege aufweist.

An dem Gitter, insbesondere an Gitterstegen, sind Dorne angebracht. Ein jeweiliger Dorn erstreckt sich quer, insbesondere senkrecht, zu dem Gitter.

Auch wenn Maulwürfe nützliche Funktionen erfüllen, werden die von ihnen erzeugten Erdhügel bspw. in Gärten, Parks oder dergleichen als störend empfunden. Bisher wurde zur Abwehr von Maulwürfen versucht, diese bspw. mit Duftstoffen oder Geräuschen von derartigen Bodenbereichen fernzuhalten.

Auch ist bekannt, sog. Maulwurfnetze in den Boden einzugraben oder bspw. unter Rollrasen zu verlegen, um das Durchgraben des Rasens durch Maulwürfe zu verhindern. An derartigen Maulwurfnetzen wird als nachteilig empfunden, dass diese für ihre Verlegung einen hohen Aufwand erfordern und dass insbesondere textile Netze je nach Ausführung von Maulwürfen durchbissen und letztlich durchdrungen werden können.

Durch die Vorrichtung zum vorbeugenden Rasenschutz vor Maulwürfen der DE 199 41 277 A sollen insbesondere Erdhügel von Maulwürfen vermieden werden. Der Schutz erfolgt durch ein unter der Grasnarbe befindliches Netz aus beschichtetem Kunststoff. Aus US 2011/0214338 A1 ist eine gattungsgemäße Sperrvorrichtung bekannt. Diese soll Tiere mittels Stacheln, die an einem Gitter anbringbar sind, abhalten. US 4,596,731 A offenbart ein zum Grasschutz dienendes Wegegitter.

Vor diesem Hintergrund liegt der Erfindung die Aufgabe zugrunde, eine vorteilhafte Sperrvorrichtung bereitzustellen. Insbesondere wird angestrebt, dass sich mittels einer erfindungsgemäßen Sperrvorrichtung die zuvor genannten Einschränkungen zumindest teilweise oder vollständig vermeiden lassen.

Diese Aufgabe wird erfindungsgemäß durch eine Sperrvorrichtung gemäß Anspruch 1, die Verwendung der Sperrvorrichtung nach Anspruch 14 und das Verfahren nach Anspruch 17 gelöst. Vorteilhafte Weiterbildungen der Erfindung sind in den abhängigen Ansprüchen angegeben.

Die Aufgabe wird gemäß einem ersten Aspekt der Erfindung in Verbindung mit dem Merkmal gelöst, dass die maximale Weite der Gitteröffnungen kleiner als 20 Millimeter ist. Dadurch kann ein Durchgreifen und Durchschlüpfen von Maulwürfen durch Gitteröffnungen vermieden werden. Indem anstelle eines Netzes zumindest ein Gitter vorgeschlagen ist, wird ein Durchbeißen der Struktur durch Maulwürfe erschwert oder unmöglich gemacht. Hinzu kommt, dass sich Gitter aufgrund ihrer im Vergleich zu Netzen stabileren Struktur bspw. bei einer

Platten oder Bahnen vergleichbaren Außenkontur einfach verlegen lassen. Ein weiterer Vorteil der vorgeschlagenen Gitter wird insbesondere auch in Verbindung mit dem gemäß einem weiteren Aspekt der Erfindung vorgeschlagenen Verfahren zur Verlegung der Sperrvorrichtung gesehen, demzufolge sich die Sperrvorrichtung auf einem Untergrund, wie bspw. einem Rasen, auch nachträglich, d. h. ohne Aufgraben des Untergrunds, verlegen lässt. In diesem Zusammenhang schlägt die Erfindung unter anderem vor, die Gitter auf einem Untergrund an der Oberfläche zu verlegen und anschließend in den Untergrund ganz oder teilweise einzudrücken. Bspw. kann die Verlegung auf einem bereits (zum Beispiel mit Rasen) bepflanzten Untergrund erfolgen, so dass die Bepflanzung das Gitter durch dessen Gitteröffnungen durchdringen und die Gitterstruktur letztlich überwuchern kann, so dass die Sperrvorrichtung schließlich ggf. nicht mehr sichtbar ist. Es besteht aber auch die Möglichkeit, das oder die Gitter der Sperrvorrichtung auf noch unbepflanztem Untergrund zu verlegen und in die Oberfläche des Untergrundes einzudrücken, woraufhin dann erst im Anschluss eine Bepflanzung und Überwucherung erfolgen kann.

An dem Gitter sind Dorne angebracht, die sich quer, insbesondere senkrecht, zu dem Gitter erstrecken. Zweckmäßig handelt es sich bei dem Gitter um ein flächiges Gitter, also um ein sich flächig bzw. flächenartig erstreckendes Gitter. Zum Beispiel kann es sich um eine Gittermatte oder bspw. um eine Gitterplatte handeln. Es besteht die Möglichkeit, dass das Gitter biegsam ist. Dies erleichtert zum Beispiel auch eine geometrische Anpassung an einen unebenen Untergrund.

Bevorzugt ist, dass sich ein jeweiliger Dorn quer, insbesondere senkrecht, zu einer flächigen Erstreckung eines Gitterbereiches, an dem sich der Anbringungsort des Dorns an dem Gitter befindet, erstreckt. Wenn sich der Anbringungsort eines Dornes an dem Gitter an einem ebenen Gitterbereich befindet, ist bevorzugt, dass sich der Dorn quer, insbesondere senkrecht, zu der ebenen Erstreckung dieses Gitterbereichs erstreckt. Wenn das Gitter insgesamt in sich eben ist (bzw. bezogen auf eine ebene Form des Gitters), ist bevorzugt, dass sich die Dorne quer, insbesondere senkrecht, zu einer von den Gitterstegen aufgespannten geometrischen Gitterebene erstrecken. Es besteht die Möglichkeit, dass das Gitter teilweise oder insgesamt uneben ist. Wenn sich der Anbringungsort eines Dornes an dem Gitter an einem gewölbten Gitterbereich befindet, ist bevorzugt, dass sich der Dorn quer, insbesondere senkrecht, zu einer Tangentialebene an diesen Gitterbereich an diesem Anbringungsort erstreckt.

Mit den an dem Gitter angebrachten Dornen lassen sich die Gitter an dem Untergrund vernageln bzw. quasi verkrallen. Dies erleichtert das Fixieren auf einem bestimmten gewählten Bereich des Untergrunds und verhindert ein insbesondere nachträgliches, ungewolltes Verschieben. Insbesondere erleichtern die Dorne eine zuverlässige, möglichst vollständige (d. h. möglichst lückenlose) Abdeckung eines zu schützenden Areals des Untergrunds. Zufolge der möglichen positionstreuen Verlegung der Gitter auf dem Untergrund kann auf eine vorsorgliche Überlappung von benachbarten Gittern verzichtet werden, wodurch eine Materialeinsparung erreicht werden kann.

Die erfindungsgemäße Sperrvorrichtung ermöglicht eine Abwehr von Maulwürfen von Bodenarealen unter Beachtung des Artenschutzes. Maulwürfe, die in einem mittels der Sperrvorrichtung geschützten Areal den Boden nicht in der gewohnten Weise durchgraben können, werden auf andere Areale ausweichen. Es besteht die Möglichkeit zur nachträglichen Verlegung der Sperrvorrichtung ohne Rasenzerstörung und ohne Werkzeug. Die erfindungsgemäße Sperrvorrichtung kann auf verschiedenen Arten von Untergrund bzw. Boden und somit auf entsprechend unterschiedlichen Grundstücken genutzt werden. Zum Beispiel ist die erfindungsgemäße Sperrvorrichtung nutzbar für private Gärten, Kleingartenanlagen, Tennisplätze, Golfplätze, Parkanlagen, Zierbeete, Fußballplätze oder dergleichen. Die Sperrvorrichtung kann aus witterungsbeständigem Material hergestellt sein. Nach einer Verlegung der Sperrvorrichtung auf einem Rasen und dem anschließenden Eindrücken in die Oberfläche des Rasens oder des darunter liegenden Erdbodens lässt sich erreichen, dass keine Behinderung für Mäher oder Rasenroboter besteht. Die Gitterstege können je nach Ausgestaltung des Gitters im Vergleich zu Geweben einen höheren Widerstand gegen das Durchbeißen von Maulwürfen bieten. Eine erfindungsgemäße Sperrvorrichtung kann ein oder mehrere Gitter mit daran angebrachten Dornen umfassen.

Es bestehen zahlreiche weitere Möglichkeiten zur bevorzugten Weiterbildung. So besteht die Möglichkeit, dass das Gitter an einem oder mehreren, insbesondere an sämtlichen, seitlichen Rändern des Gitters je einen Gittersteg aufweist, an dem Dorne angebracht sind, und/oder dass an Gitterstegen an Anbringungsorten, die von sämtlichen seitlichen Rändern des Gitters und insbesondere von sämtlichen an seitlichen Rändern des Gitters verlaufenden Gitterstegen beabstandet sind, Dorne angebracht sind. In einem bevorzugten Ausführungsbeispiel weisen die Gitterstege an den seitlichen Rändern des Gitters in ihrem Querschnitt eine größere Breite auf als die zwischen den Rändern verlaufenden Gitterstege. Insbesondere hinsichtlich der Stabilität wird als zweckmäßig angesehen, dass Dorne an Kreuzungen von Gitterstegen, die insbesondere zwischen seitlichen Rändern des Gitters angeordnet sind, angebracht sind.

Bei einem bevorzugten Ausführungsbeispiel ist vorgesehen, dass das Gitter und die Dorne einstückig hergestellt sind. Dies ermöglicht eine stabile Anbindung der Dorne und vereinfacht die Verlegung. Das Gitter und die Dorne können vorzugsweise aus Kunststoff, zum Beispiel aus Polyethylen, hergestellt sein. Auch andere vergleichbare oder hinreichend feste Werkstoffe kommen in Betracht. Ebenfalls als zweckmäßig wird angesehen, dass alle Dorne auf der gleichen Gitterseite angeordnet sind. Gemäß dem von der Erfindung vorgeschlagenen Verlegeverfahren kann eine gewünschte Anzahl von Gittern mit nach unten gerichteten Dornen zunächst auf der Oberfläche eines Untergrunds abgesetzt werden. Um die Gitter mit den Dornen anschließend möglichst einfach in die Oberfläche des Untergrunds eindrücken zu können, ist bevorzugt, dass sich die Dorne zu ihrem jeweiligen freien Längsende hin verjüngen. Als zweckmäßig wird angesehen, dass sich die Dorne bis zu einer jeweiligen Spitze verjüngen.

Um das Durchbeißen von Gitterstegen zu erschweren, wird vorgeschlagen, dass die maximale Abmessung der Gitterstege in jedem Stegquerschnitt, gemessen parallel zu jeder innerhalb des jeweiligen Stegquerschnitts verlaufenden Richtung, größer oder gleich 1 mm beträgt, insbesondere größer oder gleich 3 mm beträgt. Der Querschnitt der Gitterstege ist somit größer als bei herkömmlichen Geweben. Um trotzdem bzw. zugleich das Eindrücken der Gitterstege in den Untergrund zu erleichtern, wird als zweckmäßig angesehen, dass zumindest mehrere, insbesondere alle, Gitterstege des Gitters bezüglich ihres Stegquerschnitts eine mehreckige, zum Beispiel eine rechteckige, quadratische, rautenförmige oder dreieckige, Außenkontur aufweisen. Insbesondere ist in diesem Zusammenhang bevorzugt, dass sich der mehreckige Stegquerschnitt von Gitterstegen zu der Gitterseite hin, auf der sich die Dorne erstrecken, mit zunehmendem Abstand von der Querschnittsmitte (M) des Gitterstegs verjüngt. Die somit auf der Gitterseite, auf der sich die Dorne befinden, liegende Kante der Gitterstege kann einer Schneide vergleichbar das Eindringen der Gitterstege in den Untergrund erleichtern bzw. die dazu notwendige Kraft reduzieren. Es versteht sich aber, dass anstelle einer mehreckigen Querschnittskontur der Gitterstege bspw. auch eine runde, insbesondere eine kreisrunde, Querschnittsaußenkontur der Gitterstege in Betracht kommt.

Ebenfalls besteht die Möglichkeit, dass das Gitter eine Platte umfasst, die das Gitter ausbildet und von den Gitteröffnungen durchbrochen ist. Es besteht die Möglichkeit, dass sich die innerhalb einer gemeinsamen Plattenebene liegenden Gitterstege gegenseitig an den Kreuzungen der Gitterstege durchdringen, wobei die Kreuzungen Bestandteil der jeweiligen, sich dort durchdringenden Gitterstege sind.

Die Gitteröffnungen können praktisch beliebige Formen besitzen. Zum Beispiel kommen runde (bspw. kreisrunde) oder mehreckige Außenkonturen der Gitteröffnungen in Betracht, wie bspw. dreieckige, viereckige (insbesondere quadratische) Gitteröffnungen oder dergleichen. In Betracht kommen bspw. quadratische Gitteröffnungen mit Kantenlängen von 12 mm x 12 mm. Es können aber auch im Vergleich dazu kleinere oder größere Öffnungsweiten in Betracht gezogen werden.

Als zweckmäßig wird angesehen, dass zumindest ein Teil der Dorne oder dass alle Dorne einen jeweiligen, in der jeweiligen Längsrichtung des Dorns durchgehenden Hohlkanal aufweisen, wobei jeder Hohlkanal zusammen mit einer jeweiligen Öffnung im Gitter eine Durchgangsöffnung bildet. Vorzugsweise können die Dorne im Querschnitt eine runde Außenkontur und ihr Hohlkanal einen kreisrunden Querschnitt besitzen. Derartige Durchgangsöffnungen ermöglichen verschiedene weitere Vorteile. So ist bevorzugt, dass die Vorrichtung Stifte umfasst, wobei ein jeweiliger Stift einen Schaft aufweist, dessen Querschnittsabmessungen zum Hindurchführen des Schafts durch die Durchgangsöffnung an deren lichte Weite angepasst ist und wobei die Länge eines jeweiligen Schafts größer als die Länge der Durchgangsöffnungen ist. Vorzugsweise kann der Schaft an seinem einen Längsende einen demgegenüber im Querschnitt vergrößerten Stiftkopf aufweisen. Vorzugsweise kann der Schaft an einem (bzw. dem anderen) Längsende einen sich, vorzugsweise bis zu einer Spitze, verjüngenden Längenabschnitt aufweisen. Die Stifte können bspw. aus Kunststoff oder aus Metall hergestellt sein. Während bereits die Dorne der Gitter und auch insbesondere schneidenartige Kanten der Gitterstege an der Unterseite einen guten Halt der Gitter (insbesondere auch an steilen Hanglagen) ermöglichen, kann dies durch die angesprochenen Stifte weiter begünstigt werden, besonders wenn diese eine im Vergleich zu den Dornen größere Länge besitzen und ihre Spitze bis in eine tiefere Bodenschicht eindringen kann. Gemäß einem weiteren Aspekt ist bevorzugt, dass die Sperrvorrichtung mehrere Gitter mit jeweils daran angebrachten Dornen umfasst, wobei in Bezug auf jedes dieser Gitter zumindest ein Teil der daran angebrachten Dorne oder alle daran angebrachten Dorne jeweils einen in der jeweiligen Längsrichtung des Dorns durchgehenden Hohlkanal aufweisen und wobei jeder Hohlkanal zusammen mit einer jeweiligen Öffnung in dem Gitter eine Durchgangsöffnung bildet. Insbesondere in diesem Zusammenhang ist bevorzugt, dass die Sperrvorrichtung Krampen umfasst, wobei eine jeweilige Krampe zwei Schenkel aufweist, deren Querschnittsabmessungen zum Hindurchführen des jeweiligen Schenkels durch je eine Durchgangsöffnung an die lichte Weite der Durchgangsöffnungen angepasst ist und wobei insbesondere die Länge eines jeweiligen Schenkels größer als die Länge der Durchgangsöffnungen ist. Derartige Krampen, bei denen es sich zweckmäßig um U-förmig gebogene Verbindungselemente handelt, können beispielsweise aus Kunststoff oder aus Metall hergestellt sein. Wenn die erfindungsgemäße Sperrvorrichtung mehrere Gitter mit daran angebrachten Dornen umfasst, können in zueinander benachbarter, insbesondere angrenzender, Lage verlegte Gitter mittels der Krampen aneinander fixiert werden. Dazu können die Schenkel von Krampen in an benachbarten Platten und ihren Dornen ausgebildete Durchgangsöffnungen gesteckt werden. Das oder die Gitter mit den daran angebrachten Dornen können je nach Bedarf in die Oberfläche eines ebenen oder eines unebenen Untergrundes eingebracht werden, wobei sich insbesondere auf unebenem Untergrund mittels der Stifte und/oder Krampen eine bessere Anpassung der Gitterform und bessere Verankerung erreichen lässt. Es besteht die Möglichkeit, dass Gitter mit daran befestigten Dornen bzgl. der Außenkontur zum Beispiel Plattenform aufweisen. Dies ermöglicht das Stapeln von Platten.

Es besteht zwar die Möglichkeit, Gitter mit nach unten weisenden Dornen in einen Untergrund einzugraben. Dies ist allerdings nicht notwendig. Um das Verlegen zu vereinfachen, ist stattdessen gemäß einem weiteren Aspekt der Erfindung ein Verfahren und eine Verwendung der erfindungsgemäßen Sperrvorrichtung bevorzugt, womit auch ein nachträgliches Verlegen der Sperrvorrichtung ohne Grabungsarbeiten und mit im Vergleich dazu verringertem Aufwand möglich ist. Dazu wird vorgeschlagen, dass ein oder mehrere Gitter mit nach unten weisenden Dornen auf einen Untergrund, vorzugsweise auf einen Erdboden oder auf einen Rasen, aufgesetzt und anschließend darin bis zu einer gewünschten Tiefe eingedrückt wird oder werden. Es besteht die Möglichkeit, dass das Eindrücken mittels Eintreten und/oder mittels Einstampfen und/oder mittels Einwalzen erfolgt. Als zweckmäßig wird angesehen, dass vor oder nach dem Eindrücken in mehrere Durchgangsöffnungen ein Stift eingesteckt wird. Auch besteht die Möglichkeit, dass zumindest zwei Gitter mit zueinander benachbarten, insbesondere mit aneinander angrenzenden, Rändern auf den Untergrund aufgesetzt werden und dass vor oder nach dem Eindrücken der Gitter Krampen mit ihrem einen Schenkel in eine Öffnung in dem einen Gitter und in den an diese Öffnung anschließenden Hohlkanal und mit ihrem anderen Schenkel in eine Öffnung in dem anderen Gitter und in den an diese Öffnung anschließenden Hohlkanal gesteckt werden. Schließlich besteht die Möglichkeit, dass auf die Gitter nach dem Aufsetzen der Gitter auf dem Untergrund, insbesondere nach dem Eindrücken der Gitter in den Untergrund, Deckmaterial wie bspw. Erde aufgebracht wird, wobei die Gitter insbesondere vollständig von dem Deckmaterial bedeckt werden.

Die Erfindung wird nachfolgend anhand der beigefügten Figuren, welche bevorzugte Ausführungsbeispiele zeigen, weiter beschrieben. Im Einzelnen zeigt:
- Fig. 1: perspektivisch in einer Draufsicht einen Abschnitt einer erfindungsgemäßen Sperrvorrichtung gemäß einem ersten bevorzugten Ausführungsbeispiel;
- Fig. 2: perspektivisch eine Unteransicht des in Fig. 1 gezeigten Abschnittes;
- Fig. 3: einen Stegquerschnitt entlang Schnittebene III - III gemäß Fig. 1, demgegenüber in Vergrößerung;
- Fig. 3a: einen zu Fig. 3 alternativen Stegquerschnitt;
- Fig. 3b: einen weiteren, zu Fig. 3 alternativen Stegquerschnitt;
- Fig. 3c: einen weiteren, zu Fig. 3 alternativen Stegquerschnitt;
- Fig. 3d: einen weiteren, zu Fig. 3 alternativen Stegquerschnitt;
- Fig. 4: perspektivisch einen Abschnitt einer erfindungsgemäßen Sperrvorrichtung gemäß einem zweiten bevorzugten Ausführungsbeispiel;
- Fig. 4a: perspektivisch und entlang Schnittlinie IVa - IVa in Figur 4 winklig geschnitten eine Ausschnittsvergrößerung zu Fig. 4 mit ergänzten Stiften und Krampen, wobei die Anordnung auf einem Untergrund abgesetzt ist;
- Fig. 4b: die in Fig. 4a gezeigte Anordnung nach dem Eindrücken der Sperrvorrichtung in den Untergrund;
- Fig. 5: perspektivisch einen Abschnitt einer erfindungsgemäßen Sperrvorrichtung gemäß einem weiteren bevorzugten Ausführungsbeispiel;
- Fig. 6: perspektivisch einen Abschnitt einer erfindungsgemäßen Sperrvorrichtung gemäß einem noch weiteren bevorzugten Ausführungsbeispiel und
- Fig. 6a: eine Ausschnittsvergrößerung zu Fig. 6.

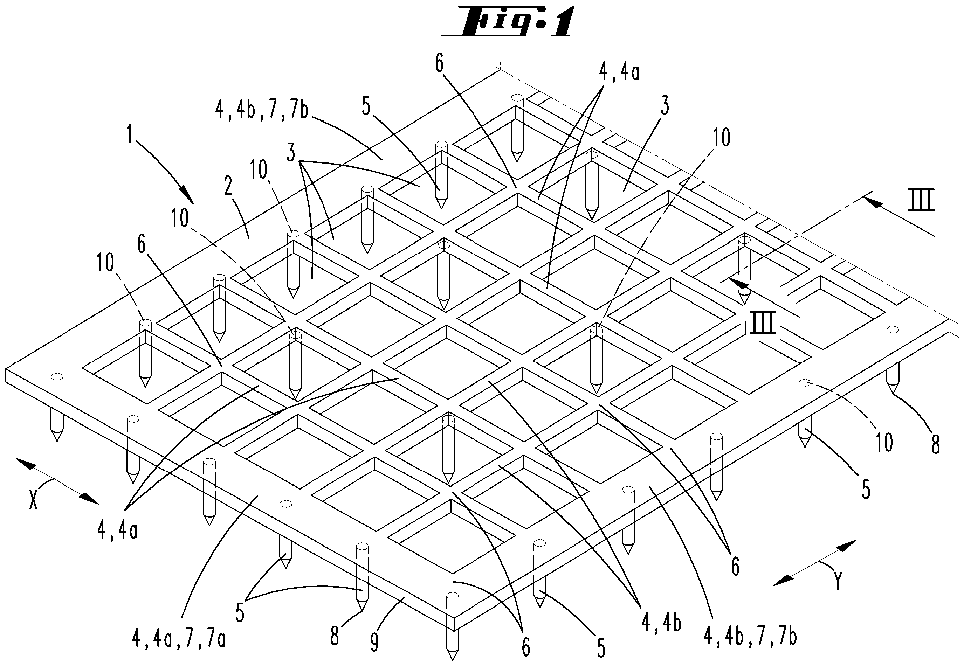

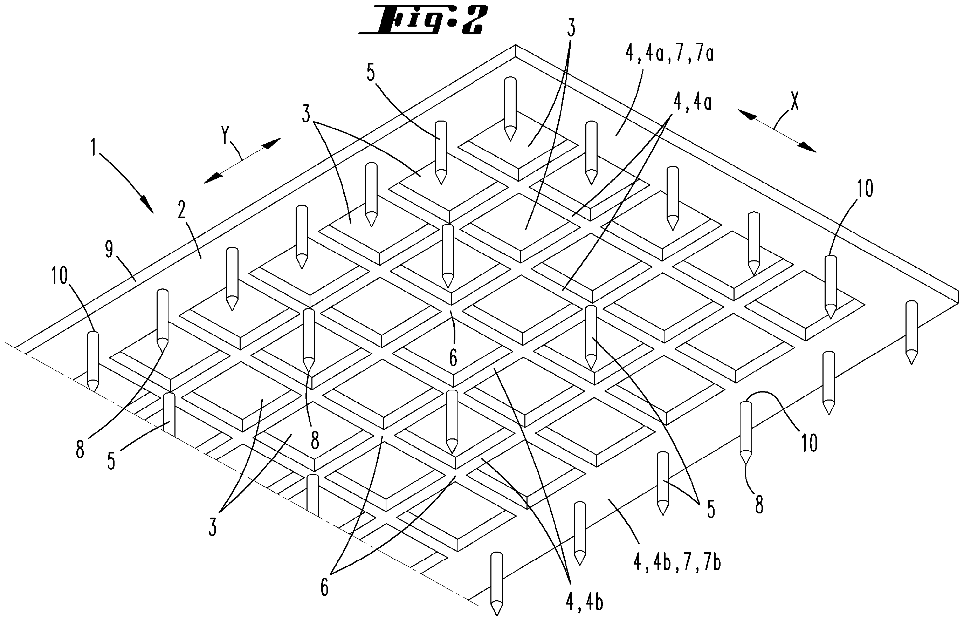

Mit Bezug auf die Figuren 1 und 2 wird zunächst ein erstes bevorzugtes Ausführungsbeispiel einer erfindungsgemäßen Sperrvorrichtung 1 vorgestellt. In dem Beispiel umfasst diese ein in Figur 1 abschnittsweise gezeigtes Gitter 2, das Gitteröffnungen 3 berandende Gitterstege 4 aufweist. In dem Beispiel handelt es sich um parallel zu einer Richtung X verlaufende, voneinander beabstandete Gitterstege 4a und um parallel zu einer Richtung Y verlaufende, voneinander beabstandete Gitterstege 4b. Die Richtungen X und Y verlaufen senkrecht zueinander, so dass sich die Gitterstege 4a und die Gitterstege 4b richtungsmäßig senkrecht kreuzen und dabei die im Beispiel quadratischen Gitteröffnungen 3 beranden. In dem Beispiel erstrecken sich die Gitterstege 4a und 4b alle in einer bzw. parallel zu einer gemeinsamen geometrischen Gitterebene, wobei sie sich an Kreuzungen 6 gegenseitig durchdringen. Die Kreuzungen 6 sind somit Bestandteil der Gitterstege 4a und auch der Gitterstege 4b. In dem Beispiel entspricht die Länge der Gitterstege 4a einer Breite des Gitters 2 und die Länge der Gitterstege 4b einer Länge des Gitters 2, wobei das Gitter 2 aber in den Figuren 1 und 2 nicht in seiner ganzen Länge gezeigt ist. Das Gitter 2 besitzt somit im Beispiel einen rechteckigen Grundriss. An den Gitterstegen 4 sind Dorne 5 fest angebracht. Dabei erstreckt sich ein jeweiliger Dorn 5 in seiner Längsrichtung senkrecht zu der von den Gitterstegen 4a, 4b aufgespannten geometrischen Gitterebene. Auch seitliche Ränder 7 des Gitters 2 werden von je einem Gittersteg 4 gebildet. In näherer Einzelheit wird ein seitlicher Rand 7a von einem Gittersteg 4a und ein seitlicher Rand 7b von einem Gittersteg 4b gebildet. In dem Beispiel (also nicht notwendig) umfasst das Gitter auch an einem dem gezeigten seitlichen Rand 7a bzgl. der Richtung Y entgegengesetzten seitlichen Rand 7a einen Gittersteg 4a. Entsprechend umfasst das Gitter in dem Beispiel auch an beiden bzgl. der Richtung X entgegengesetzten seitlichen Rändern 7b je einen Gittersteg 4b. In dem Beispiel ist vorgesehen, dass an den die seitlichen Ränder bildenden Gitterstegen jeweils eine Mehrzahl von Dornen 5 angebracht ist. Außerdem sind in dem Beispiel an einzelnen Gitterstegen 4, die zwischen seitlichen Rändern 7 angeordnet sind, ebenfalls Dorne 5 angebracht. Exemplarisch sind dabei die Dorne 5 jeweils an Kreuzungen von zumindest zwei Gitterstegen 4 fest angebracht. In dem Beispiel sind das Gitter 2 und die Dorne 5 einstückig aus Polyethylen hergestellt. Alle Dorne 5 sind bezüglich der von den Gitterstegen 4 aufgespannten geometrischen Gitterebene auf der gleichen Gitterseite, nämlich auf der in Figur 1 in Blickrichtung unterhalb des Gitters 2 liegenden Gitterseite, angeordnet. Ebenfalls zeigt Figur 1, dass sich die Dorne 5 in einem an ihr freies Längsende 8 angrenzenden Längenabschnitt bis zu einer Spitze verjüngen. Es versteht sich, dass die Anzahl und Anordnung der Dorne nur exemplarisch gezeigt ist.

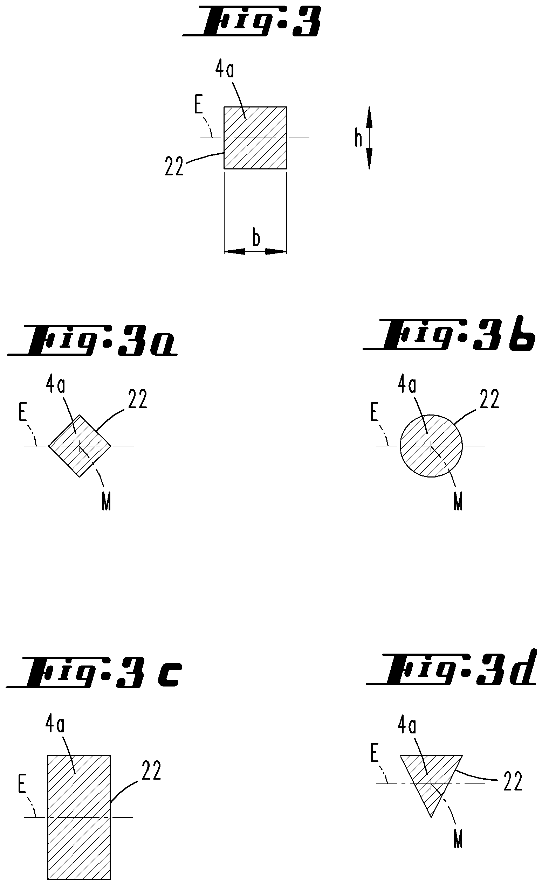

Figur 3 zeigt, im Vergleich zu den Figuren 1 und 2 in Vergrößerung, einen Stegquerschnitt eines Steges 4a, der zwischen den seitlichen Rändern 7a angeordnet ist, entlang Schnittebene III - III gemäß Figur 1. Dieser Stegquerschnitt besitzt eine quadratische Außenkontur 22. In dem Beispiel werden auch die Stegquerschnitte der hierzu senkrechten, zwischen den Rändern 7b verlaufenden Gitterstege 4b von einer entsprechenden quadratischen Außenkontur 22 berandet. Die geometrische (also gedachte) Gitterebene ist in Figur 3 mit E bezeichnet. In dem Beispiel beträgt die parallel zu der Gitterebene gemessene Stegbreite b ebenso wie die hierzu senkrecht gemessene Steghöhe h jeweils 3 mm. Abweichend davon beträgt an den an den seitlichen Rändern 7 verlaufenden Gitterstegen 4a, 4b die Stegbreite das Doppelte, also in dem Beispiel 6 mm, während die Steghöhe dort der Steghöhe der zwischen den Rändern 7 verlaufenden Gitterstege 4 entspricht, also ebenfalls 3 mm beträgt. Alternativ könnten die zwischen den Rändern 7 angeordneten Gitterstege 4a, 4b flache Stegquerschnitte aufweisen, bspw. Stegquerschnitte mit einer rechteckigen Außenkontur, deren parallel zur Gitterebene gemessene Breite größer als die Höhe ist. Aus dem vorangehend Gesagten folgt, dass bei dem in Figur 3 gezeigten Stegquerschnitt die maximale Abmessung des Gittersteges 4a, gemessen parallel zu jeder innerhalb dieses Stegquerschnittes, also innerhalb der Zeichenebene von Figur 3, verlaufenden Richtung, zumindest 3 mm beträgt. Gemessen parallel zu einer Richtung, die in einem Winkel von 45° geneigt zu der eingetragenen geometrischen Gitterebene E verläuft, resultiert die maximale Abmessung des Gittersteges 4a an der Diagonalen des Stegquerschnittes und beträgt in dem Beispiel etwa 4,2 mm.

Die Figuren 3a bis 3d zeigen exemplarisch vier, von Figur 3 abweichende mögliche Formen von Stegquerschnitten der Gitterstege 4. Diese können jeweils alternativ oder kombinativ zu der in Figur 3 gezeigten Querschnittsform vorzugsweise an zwischen den seitlichen Rändern 7 angeordneten Gitterstegen 4 verwirklicht sein. Es versteht sich aber, dass die in den Figuren 3 bis 3d gezeigten Querschnittsformen alternativ oder kombinativ auch an seitliche Ränder 7 bildenden Gitterstegen 4 realisiert sein können. Der in Figur 3a gezeigte Stegquerschnitt ist ebenfalls quadratisch, jedoch verglichen zu Figur 3 in Bezug auf die angedeutete geometrische Gitterebene E um eine Vierteldrehung (also um 90°) verdreht. Mit M ist die Querschnittsmitte bezeichnet, durch welche in der exemplarischen Darstellung die geometrische Gitterebene E führt. Es wird deutlich, dass sich in dem Beispiel der viereckige Stegquerschnitt auf beiden Seiten der Gitterebene E mit zunehmendem Abstand von der Querschnittsmitte bis zu einer Spitze hin (also bis zu einer Kante des Gittersteges) verjüngt. Der in Figur 3b gezeigte Stegquerschnitt besitzt eine kreisrunde Außenkontur 22. Der in Figur 3c gezeigte Stegquerschnitt besitzt eine rechteckige Außenkontur 22, deren Erstreckung quer zu der geometrischen Gitterebene E größer als in zu der Gitterebene E paralleler Richtung ist. Der in Figur 3d gezeigte Stegquerschnitt besitzt eine dreieckige Außenkontur 22. Die Drehlage des Dreieckes relativ zu der geometrischen Gitterebene E ist so gewählt, dass sich der Stegquerschnitt zu der einen Gitterseite hin mit zunehmendem Abstand von der Querschnittsmitte M, durch welche die geometrische Gitterebene E hier dargestellt ist, bis zu einer Spitze hin verjüngt. In den Figuren 3 bis 3d ist eine durch die Mitte der Stegquerschnitte führende geometrische Gitterebene E eingetragen. Es versteht sich, dass die Gitterebene E auch hierzu parallel verschoben dargestellt werden könnte.

In dem Beispiel ist vorgesehen, dass das Gitter 2 aus einer Platte 9 hergestellt ist, die von den Gitteröffnungen 3 durchbrochen ist. Im Beispiel beträgt die Plattendicke 3 mm. Exemplarisch ist vorgesehen, dass die Kantenlängen der Gitteröffnungen 3 jeweils 12 mm betragen. Somit beträgt die maximale Weite der Gitteröffnungen 3 an ihrer jeweiligen Diagonalen etwa 17 mm. Stattdessen könnten bspw. Kantenlängen von jeweils weniger als 12 mm gewählt sein. Entlang der Gitterstege 4, die seitliche Ränder 7 des Gitters 2 bilden, sind Dorne 5 auf beiden Seiten einer an den Gittersteg 4 angrenzenden jeweiligen Gitteröffnung 3 angeordnet. In Richtung X sind somit an jedem seitlichen Rand 7 sechs Dorne 5 angebracht. Dazu vergleichbar ist an den Gitterstegen 4b, welche seitliche Ränder 7b bilden, jeweils auf beiden Seiten der daran angrenzenden Gitteröffnungen 3 jeweils ein Dorn 5 angebracht. In dem Beispiel beträgt die Länge der Dorne 20 mm. Es versteht sich, dass auch die in den Figuren 1 und 2 gewählten Anbringungsorte 10 der Dorne 5 nur exemplarisch sind und dass hiervon Abweichungen hinsichtlich der Anzahl der Dorne 5 und/oder der Lage der Anbringungsorte 10 bestehen können. Zum Beispiel besteht die Möglichkeit, entlang der Ränder 7 des Gitters 2 eine im Vergleich zu den Figuren 1, 2 geringere Anzahl von Dornen 5 anzubringen. Zum Beispiel könnte dort der Abstand zwischen jeweils zueinander benachbarten Dornen 5 jeweils um etwa eine Größenordnung größer als die Seitenlänge der Gitteröffnungen 3 sein. Zum Beispiel könnte entlang der Ränder 7 zwischen benachbarten Dornen 5 der Abstand 120 mm betragen. Es versteht sich, dass die in den Figuren und in der Beschreibung angegebenen Größen und Größenverhältnisse nur exemplarisch gewählt sind.

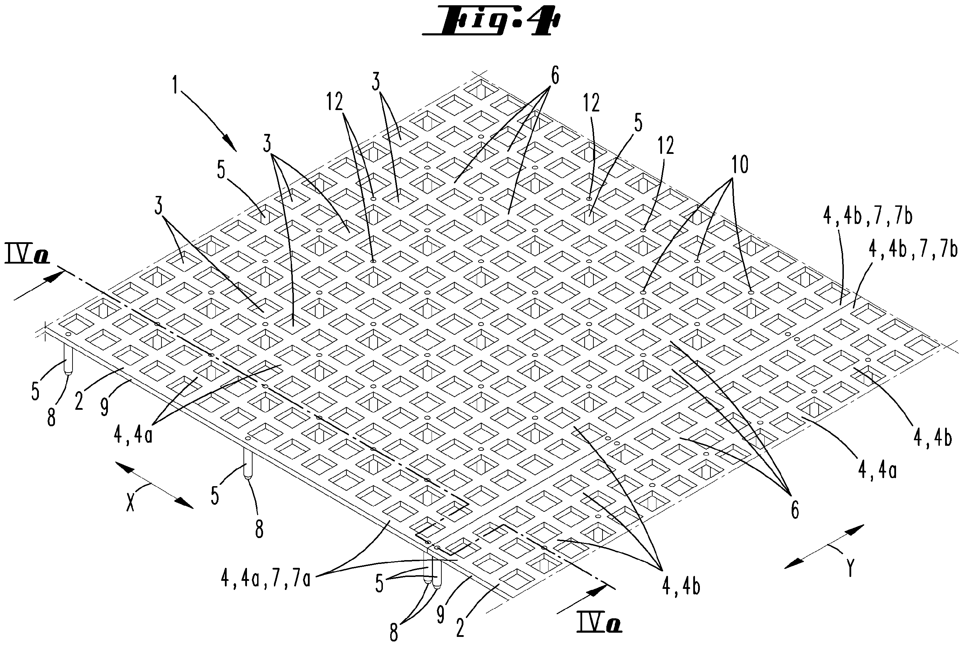

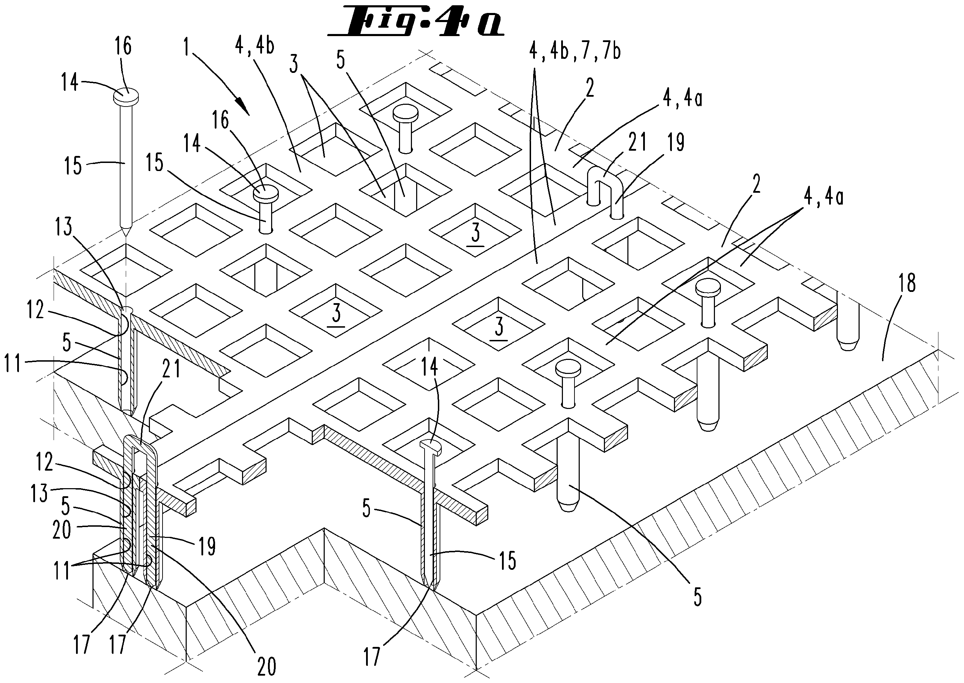

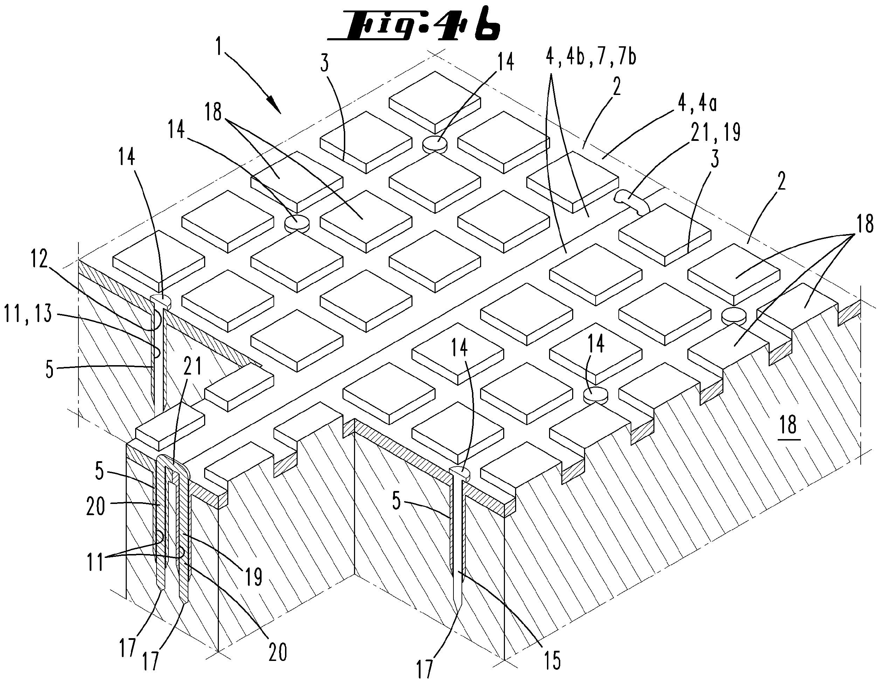

Mit Bezug auf die Figuren 4, 4a und 4b wird eine erfindungsgemäße Sperrvorrichtung 1 gemäß einem weiteren bevorzugten Ausführungsbeispiel beschrieben. Diese Sperrvorrichtung 1 umfasst zumindest zwei (oder mehr) Gitter 2 mit jeweils daran angebrachten Dornen 5. Von den beiden Gittern 2 ist jeweils nur ein Abschnitt dargestellt, wie die gestrichelten Linien schematisch anzeigen. Die beiden Gitter 2 sind in dem in Figur 4 gezeigten Gebrauchszustand entlang eines jeweiligen seitlichen Randes 7 aneinander angrenzend angeordnet, so dass die Dorne 5 an beiden Gittern 2 nach unten zeigen. Zur besseren Übersicht und Vergleichbarkeit sind für korrespondierende Merkmale die gleichen Bezugszeichen wie in den Figuren 1 und 2 gewählt. Wie die Figuren 4, 4a und 4b gemeinsam zeigen, sind an die Gitter 2 die jeweiligen Dorne 5 einstückig angeformt. Ein jeweiliger Dorn 5 besitzt einen in seiner Längsrichtung durchgehenden Hohlkanal 11. Dieser geht in eine Öffnung 12 über, die sich senkrecht zu der Gitterebene durch das Gitter 2 hindurch erstreckt. Ein Hohlkanal 11 und eine dazu fluchtende Öffnung 12 bilden jeweils gemeinsam eine Durchgangsöffnung 13. In dem Beispiel ist diese im Bereich sämtlicher Dorne 5 gleich ausgeführt. Exemplarisch besitzt die Durchgangsöffnung 13 einen kreisrunden Querschnitt mit in ihrer Längsrichtung einheitlichem Durchmesser.

Die Figuren 4a und 4b zeigen, dass die Sperrvorrichtung 1 in dem Beispiel Stifte 14 umfasst, wobei ein jeweiliger Stift 14 einen Schaft 15 und einen Stiftkopf 16 aufweist. An seinem dem Stiftkopf 16 entgegengesetzten Längsende verjüngt sich der Schaft 15 zu einer Spitze 17. Der Schaft 15 besitzt einen kreisrunden Querschnitt, dessen Durchmesser in dem Beispiel etwas kleiner als der Durchmesser der Durchgangsöffnung 13 gewählt ist, so dass sich der Schaft 15 durch die Durchgangsöffnung 13 hindurchführen lässt. Die Figuren zeigen auch, dass die Länge eines jeweiligen Schafts 15 größer als die Länge der Durchgangsöffnungen 13 ist. Bei der in Figur 4a gezeigten Gebrauchsstellung der Sperrvorrichtung 1 wurden die beiden Gitter 2 mit den daran angebrachten Dornen 5 auf einen mit 18 bezeichneten Untergrund aufgesetzt und in die Durchgangsöffnungen 13 ein jeweiliger Stift 14 eingesetzt. Lediglich zur Veranschaulichung ist eine Durchgangsöffnung 13 vor dem Einsetzen des Stifts 14 dargestellt.

In dem Beispiel umfasst die Sperrvorrichtung 1 auch Krampen 19. Dabei handelt es sich um im Wesentlichen U-förmig gebogene Befestigungselemente, die zur Verbindung von benachbarten Gittern 2 dienen. Jede Krampe 19 weist zwei in dem Beispiel zueinander parallele Schenkel 20 auf. Jeder Schenkel 20 besitzt einen kreisrunden Querschnitt, dessen Durchmesser geringfügig kleiner als der Durchmesser der Durchgangsöffnungen 13 gewählt ist, so dass sich die Schenkel 20 durch die Durchgangsöffnungen 13 hindurchstecken lassen. Die Länge der Schenkel 20 ist etwas größer als die Länge der Durchgangsöffnungen 13 gewählt. Die beiden Schenkel 20 sind mittels eines Quersteges 21 verbunden. Die Länge des Quersteges 21 ist, wie Figur 4a zeigt, in der Weise auf den Randabstand der an den seitlichen Rändern 7b angebrachten Dorne 5 abgestimmt, dass sich bei angrenzender Anordnung von zwei benachbarten Gittern 2 mit paarweise benachbarten Dornen 5 jeweils eine Krampe 19 mit ihren beiden Schenkeln 20 in je eine der beiden zugeordneten Durchgangsöffnungen 13 einsetzen lässt. Dies ist in der in Figur 4a gezeigten Gebrauchsstellung dargestellt.

Figur 4 zeigt zugleich einen Schritt bei einer die erfindungsgemäße Sperrvorrichtung 1 betreffenden erfindungsgemäßen Verwendung bzw. bei einem erfindungsgemäßen Verfahren, jeweils gemäß einem bevorzugten Ausführungsbeispiel. Davon ausgehend besteht die Möglichkeit, die beiden in Figur 4 gezeigten Gitter 2 mit jeweils daran angeformten Dornen 5 auf einen Untergrund 18 (bspw. auf einen Erdboden, auf einen Rasen oder dergleichen) mit nach unten weisenden Dornen aufzusetzen. Vor oder nach dem Aufsetzen können die beschriebenen Stifte 14 und/oder Krampen 19 auf die beschriebene Weise in Durchgangsöffnungen 13 eingesteckt werden. Dies ist in Figur 4a gezeigt. Ausgehend davon besteht die Möglichkeit, die Gitter 2 mit den Dornen 5, den Stiften 14 und den Krampen 19 in den Untergrund einzudrücken. Alternativ besteht die Möglichkeit, zuerst die Gitter 2 mit den Dornen 5 in den Untergrund 18 einzudrücken und anschließend Stifte 14 und/oder Krampen 19 in Durchgangsöffnungen 13 einzustecken, um die Stifte 14 und/oder Krampen 19 anschließend in den Untergrund 18 einzudrücken. Das Eindrücken kann bspw. mittels Eintreten und/oder mittels Einstampfen und/oder mittels Einwalzen erfolgen. Figur 4b zeigt exemplarisch einen Gebrauchszustand, bei welchem ausgehend von Figur 4a die Gitter 2 mit den Dornen 5, dem Stift 14 und den Krampen 19 in den Untergrund 18 eingedrückt wurden. In dem Beispiel werden die Gitter 2 so weit von oben in den Untergrund 18 eingedrückt, dass zu den Gitteröffnungen 3 korrespondierende Flächenabschnitte des Untergrundes 18 auf einem höheren Niveau als das Gitter 2 liegen.

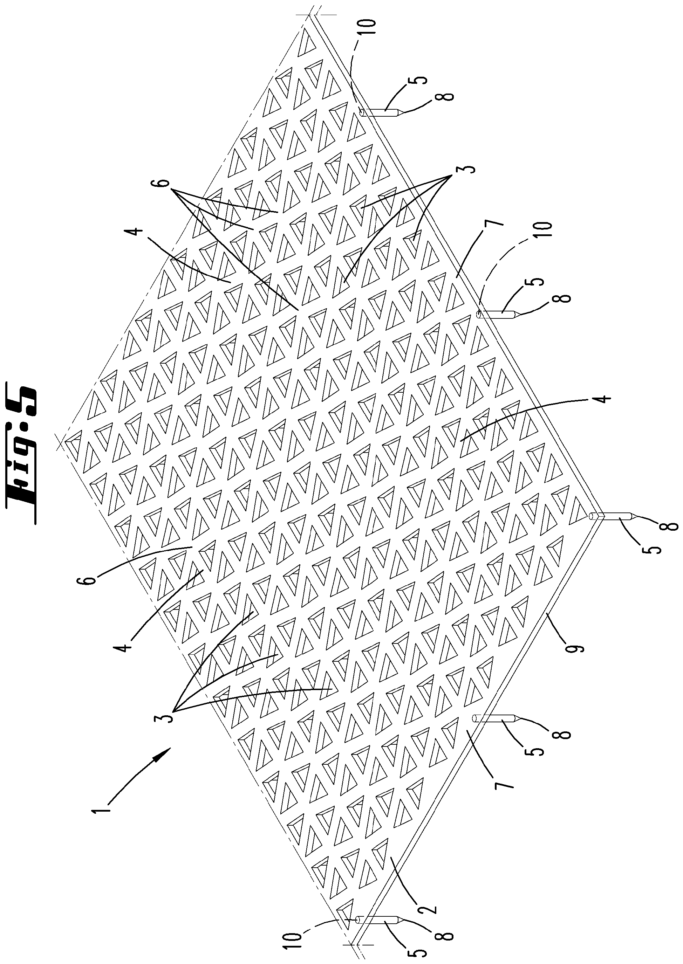

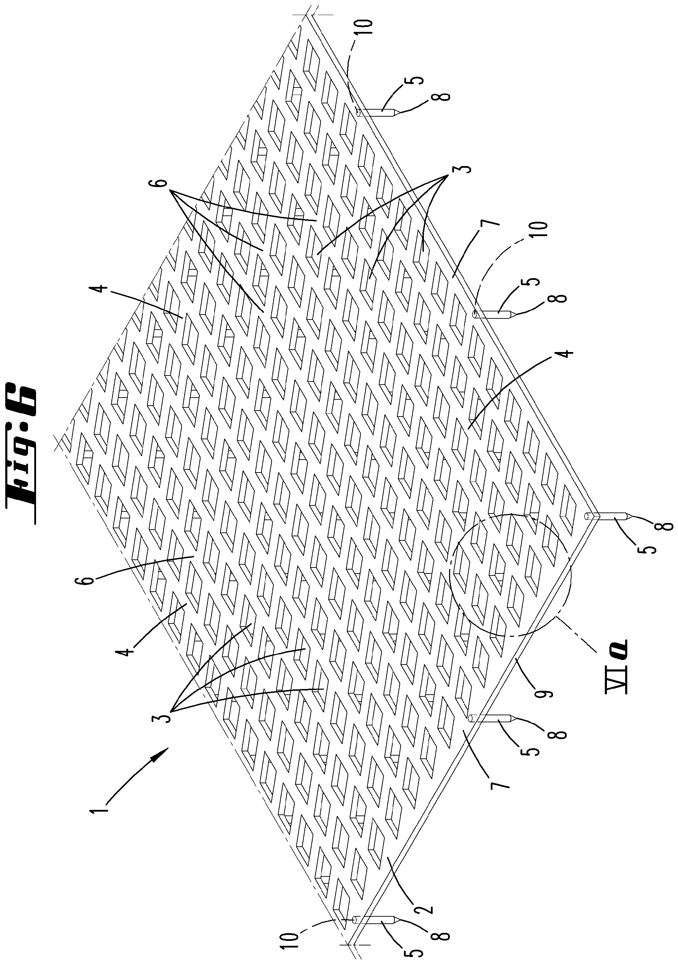

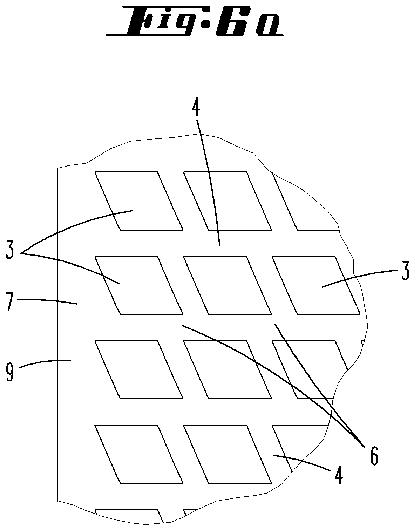

Figur 5 zeigt perspektivisch einen Teilbereich eines Gitters 2 mit daran angebrachten Dornen 5 einer erfindungsgemäßen Sperrvorrichtung 1 gemäß einem weiteren bevorzugten Ausführungsbeispiel. Die Gitteröffnungen 3 besitzen dort eine dreieckige Randkontur. Bei dem weiteren bevorzugten Ausführungsbeispiel gemäß Figuren 6 und 6a besitzen die Gitteröffnungen 3 eine rautenförmige Randkontur.

**Bezugszeichenliste:**

| | | | |
|---|---|---|---|
| 1 | Sperrvorrichtung | h | Steghöhe |
| 2 | Gitter | X | Richtung |
| 3 | Gitteröffnung | Y | Richtung |
| 4 | Gittersteg | | |
| 5 | Dorn | | |
| 6 | Kreuzung | | |
| 7 | Rand | | |
| 8 | Längsende | | |
| 9 | Platte | | |
| 10 | Anbringungsort | | |
| 11 | Hohlkanal | | |
| 12 | Öffnung | | |
| 13 | Durchgangsöffnung | | |
| 14 | Stift | | |
| 15 | Schaft | | |
| 16 | Stiftkopf | | |
| 17 | Spitze | | |
| 18 | Untergrund | | |
| 19 | Krampe | | |
| 20 | Schenkel | | |
| 21 | Quersteg | | |
| 22 | Randkontur | | |
| E | Gitterebene | | |
| b | Stegbreite | | |

## Patentansprüche

1. Sperrvorrichtung (1), insbesondere zur Abwehr von Maulwürfen, wobei die Sperrvorrichtung (1) zumindest ein Gitter (2) umfasst, welches Gitteröffnungen (3) berandende Gitterstege (4) aufweist, wobei an dem Gitter (2), insbesondere an Gitterstegen (4), Dorne (5) angebracht sind, wobei sich ein jeweiliger Dorn (5) quer, insbesondere senkrecht, zu dem Gitter (2) erstreckt, **dadurch gekennzeichnet, dass** die maximale Weite der Gitteröffnungen (3) kleiner als 20 mm ist.

2. Sperrvorrichtung (1) nach Anspruch 1, **dadurch gekennzeichnet, dass** das Gitter (2) an einem seitlichen Rand (7) des Gitters (2) oder an mehreren, insbesondere an sämtlichen, seitlichen Rändern (7) des Gitters (2) je einen Gittersteg (4) aufweist, an dem Dorne (5) angebracht sind, und/oder dass an Gitterstegen (4) an Anbringungsorten (10), die von sämtlichen seitlichen Rändern (7) des Gitters (2) und insbesondere von sämtlichen an seitlichen Rändern (7) des Gitters (2) verlaufenden Gitterstegen (4) beabstandet sind, Dorne (5) angebracht sind.

3. Sperrvorrichtung (1) nach einem oder mehreren der vorangehenden Ansprüche, **dadurch gekennzeichnet, dass** Dorne (5) an Kreuzungen (6) von Gitterstegen (4), die insbesondere zwischen seitlichen Rändern (7) des Gitters (2) angeordnet sind, angebracht sind.

4. Sperrvorrichtung (1) nach einem oder mehreren der vorangehenden Ansprüche, **dadurch gekennzeichnet, dass** das Gitter (2) und die Dorne (5) einstückig, insbesondere aus Kunststoff, wie zum Beispiel aus Polyethylen, hergestellt sind.

5. Sperrvorrichtung (1) nach einem oder mehreren der vorangehenden Ansprüche, **dadurch gekennzeichnet, dass** alle Dorne (5) auf der gleichen Seite des Gitters (2) angeordnet sind.

6. Sperrvorrichtung (1) nach einem oder mehreren der vorangehenden Ansprüche, **dadurch gekennzeichnet, dass** sich die Dorne (5) zu ihrem jeweiligen freien Längsende (8) hin verjüngen.

7. Sperrvorrichtung (1) nach einem oder mehreren der vorangehenden Ansprüche, **dadurch gekennzeichnet, dass** die maximale Abmessung der Gitterstege (4) in jedem Stegquerschnitt, gemessen parallel zu jeder innerhalb des jeweiligen Stegquerschnitts verlaufenden Richtung, größer oder gleich 1 mm beträgt, insbesondere größer oder gleich 3 mm beträgt.

8. Sperrvorrichtung (1) nach einem oder mehreren der vorangehenden Ansprüche, **dadurch gekennzeichnet, dass** zumindest mehrere, insbesondere alle, Gitterstege (4) des Gitters (2) bezüglich ihres Stegquerschnitts eine mehreckige, zum Beispiel eine rechteckige, quadratische, rautenförmige oder dreieckige, Außenkontur (22) aufweisen.

9. Sperrvorrichtung (1) nach einem oder mehreren der vorangehenden Ansprüche, **dadurch gekennzeichnet, dass** sich der mehreckige Stegquerschnitt von Gitter-stegen (4) zu der Gitterseite hin, auf der sich die Dorne (5) erstrecken, mit zunehmendem Abstand von der Querschnittsmitte (M) verjüngt.

10. Sperrvorrichtung (1) nach einem oder mehreren der vorangehenden Ansprüche, **dadurch gekennzeichnet, dass** das Gitter (2) eine Platte (9) umfasst, die von den Gitteröffnungen (3) durchbrochen ist, wobei die Gitteröffnungen (3) runde oder mehreckige Außenkonturen aufweisen.

11. Sperrvorrichtung (1) nach einem oder mehreren der vorangehenden Ansprüche, **dadurch gekennzeichnet, dass** zumindest ein Teil der Dorne (5) oder dass alle Dorne (5) einen jeweiligen, in der jeweiligen Längsrichtung (8) des Dorns (5) durchgehenden Hohlkanal (11) aufweisen, wobei jeder Hohlkanal (11) mit einer jeweiligen Öffnung (12) im Gitter (2) eine Durchgangsöffnung (13) bildet.

12. Sperrvorrichtung (1) nach einem oder mehreren der vorangehenden Ansprüche, **dadurch gekennzeichnet, dass** die Vorrichtung Stifte (14) umfasst, wobei ein jeweiliger Stift (14) einen Schaft (15) aufweist, dessen Querschnittsabmessungen zum Hindurchführen des Schafts (15) durch die Durchgangsöffnung (13) an deren lichte Weite angepasst ist und wobei die Länge eines jeweiligen Schafts (15) größer als die Länge der Durchgangsöffnungen (13) ist.

13. Sperrvorrichtung (1) nach einem oder mehreren der vorangehenden Ansprüche, **dadurch gekennzeichnet, dass** die Sperrvorrichtung (1) mehrere Gitter (2) mit jeweils daran angebrachten Dornen (5) umfasst, wobei in Bezug auf jedes dieser Gitter (2) zumindest ein Teil der daran angebrachten Dorne (5) oder alle daran angebrachten Dorne (5) jeweils einen in der jeweiligen Längsrichtung (8) des Dorns (5) durchgehenden Hohlkanal (11) aufweisen und wobei jeder Hohlkanal (11) mit einer jeweiligen Öffnung (12) in dem Gitter (2) eine Durchgangsöffnung (13) bildet, und dass die Sperrvorrichtung (1) Krampen (19) umfasst, wobei eine jeweilige Krampe (19) zwei Schenkel (20) aufweist, deren Querschnittsabmessungen zum Hindurchführen des jeweiligen Schenkels (20) durch je eine Durchgangsöffnung (13) an die lichte Weite der Durchgangsöffnungen (13) angepasst ist und wobei insbesondere die Länge eines jeweiligen Schenkels (20) größer als die Länge der Durchgangsöffnungen (13) ist.

14. Verwendung einer Sperrvorrichtung (1) gemäß einem oder mehreren der vorangehenden Ansprüche, insbesondere zur Abwehr von Maulwürfen, **dadurch gekennzeichnet, dass** ein oder mehrere Gitter (2) mit nach unten weisenden Dornen (5) auf einen Untergrund (18), insbesondere auf einen Erdboden oder auf einen Rasen, aufgesetzt und darin eingedrückt wird oder werden.

15. Verwendung nach Anspruch 14, **dadurch gekennzeichnet, dass** vor oder nach dem Eindrücken in mehrere Durchgangsöffnungen (13) ein Stift (14) eingesteckt wird.

16. Verwendung nach einem oder beiden der vorangehenden Ansprüche 14 und 15, **dadurch gekennzeichnet, dass** zumindest zwei Gitter (2) mit zueinander benachbarten, insbesondere mit aneinander angrenzenden, Rändern (7) auf den Untergrund (18) aufgesetzt werden und dass vor oder nach dem Eindrücken der Gitter (2) Krampen (19) mit ihrem einen Schenkel (20) in eine Öffnung (12) in dem einen Gitter (2) und in den an diese Öffnung (12) anschließenden Hohlkanal (11) und mit ihrem anderen Schenkel (20) in eine Öffnung (12) in dem anderen Gitter (2) und in den an diese Öffnung (2) anschließenden Hohlkanal (11) gesteckt werden.

17. Verfahren zum Verlegen einer Sperrvorrichtung (1) gemäß einem oder mehreren der vorangehenden Ansprüche, insbesondere zur Abwehr von Maulwürfen, wobei ein oder mehrere Gitter (2) mit nach unten weisenden Dornen (5) auf einen Untergrund (18), insbesondere auf einen Erdboden oder auf einen Rasen, aufgesetzt und darin eingedrückt wird oder werden.

18. Verfahren gemäß Anspruch 17, **dadurch gekennzeichnet, dass** vor oder nach dem Eindrücken in mehrere Durchgangsöffnungen (13) ein Stift (14) eingesteckt wird.

19. Verfahren gemäß einem oder beiden der Ansprüche 17 und 18, **dadurch gekennzeichnet, dass** zumindest zwei Gitter (2) mit zueinander benachbarten, insbesondere mit aneinander angrenzenden, Rändern (7) auf den Untergrund (18) aufgesetzt werden und dass vor oder nach dem Eindrücken der Gitter (2) Krampen (19) mit ihrem einen Schenkel (20) in eine Öffnung (12) in dem einen Gitter (2) und in den an diese Öffnung (12) anschließenden Hohlkanal (11) und mit ihrem anderen Schenkel (20) in eine Öffnung (12) in dem anderen Gitter (2) und in den an diese Öffnung (2) anschließenden Hohlkanal (11) gesteckt werden.

20. Verfahren gemäß einem oder mehreren der Ansprüche 17 bis 19, **dadurch gekennzeichnet, dass** auf die Gitter (2) nach dem Aufsetzen der Gitter (2) auf den Untergrund (18), insbesondere nach dem Eindrücken der Gitter (2) in den Untergrund (18), Deckmaterial wie bspw. Erde aufgebracht wird, wobei die Gitter (2) insbesondere vollständig von dem Deckmaterial bedeckt werden.

## Claims

1. Blocking device (1), in particular to repel moles, the blocking device (1) comprising at least one grid (2) which has grid bars (4) bordering grid openings (3), with spikes (5) being attached to the grid (2), in particular to grid bars (4), each spike (5) extending transversely, in particular perpendicularly, to the grid (2), **characterised in that** the maximum width of the grid openings (3) is less than 20 mm.

2. Blocking device (1) according to claim 1, **characterised in that** the grid (2) has a grid bar (4) on one lateral edge (7) of the grid (2) or on a plurality, in particular on all of the lateral edges (7) of the grid (2), to which bar spikes (5) are attached, and/or **in that** spikes (5) are attached to grid bars (4) at attachment locations (10) which are spaced apart from all of the lateral edges (7) of the grid (2) and in particular from all of the grid bars (4) extending on lateral edges (7) of the grid (2).

3. Blocking device (1) according to one or more of the preceding claims, **characterised in that** spikes (5) are attached at intersections (6) of grid bars (4) which are arranged in particular between lateral edges (7) of the grid (2).

4. Blocking device (1) according to one or more of the preceding claims, **characterised in that** the grid (2) and the spikes (5) are made in one piece, in particular made of plastics material, such as polyethylene.

5. Blocking device (1) according to one or more of the preceding claims, **characterised in that** all the spikes (5) are arranged on the same side of the grid (2).

6. Blocking device (1) according to one or more of the preceding claims, **characterised in that** the spikes (5) taper towards their free longitudinal end (8).

7. Blocking device (1) according to one or more of the preceding claims, **characterised in that** the maximum dimension of the grid bars (4) in each bar cross section, measured in parallel with each direction extending within the particular bar cross section, is greater than or equal to 1 mm, in particular greater than or equal to 3 mm.

8. Blocking device (1) according to one or more of the preceding claims, **characterised in that** at least a plurality, in particular all of the grid bars (4) of the grid (2) have a polygonal, for example a rectangular, square, diamond-shaped or triangular outer contour (22) with respect to their bar cross section.

9. Blocking device (1) according to one or more of the preceding claims, **characterised in that** the polygonal bar cross section of grid bars (4) tapers towards the side of the grid on which the spikes (5) extend, at an increasing distance from the middle (M) of the cross section.

10. Blocking device (1) according to one or more of the preceding claims, **characterised in that** the grid (2) comprises a plate (9) which is perforated by the grid openings (3), the grid openings (3) having round or polygonal outer contours.

11. Blocking device (1) according to one or more of the preceding claims, **characterised in that** at least some of the spikes (5) or **in that** all of the spikes (5) have a hollow channel (11) passing therethrough in the longitudinal direction (8) of the spike (5), each hollow channel (11) forming a through-opening (13) with a relevant opening (12) in the grid (2).

12. Blocking device (1) according to one or more of the preceding claims, **characterised in that** the device comprises pins (14), with each pin (14) having a shaft (15) of which the cross-sectional dimensions are adapted to the clear width of the through-opening (13) in order to guide the shaft (15) therethrough, and the length of each shaft (15) being greater than the length of the through-openings (13).

13. Blocking device (1) according to one or more of the preceding claims, **characterised in that** the blocking device (1) comprises a plurality of grids (2) each having spikes (5) attached thereto, and, with respect to each of these grids (2), at least some of the spikes (5) attached thereto or all of the spikes (5) attached thereto each having a hollow channel (11) passing therethrough in the longitudinal direction (8) of the spike (5), and each hollow channel (11) forming a through-opening (13) with a relevant opening (12) in the grid (2), and **in that** the blocking device (1) comprises staples (19), each staple (19) having two legs (20) of which the cross-sectional dimensions are adapted to the clear width of the through-openings (13) in order to guide each leg (20) through a through-opening (13), and in particular the length of each leg (20) being greater than the length of the through-openings (13).

14. Use of a blocking device (1) according to one or more of the preceding claims, in particular to repel moles, **characterised in that** one or more grids (2) having downwardly pointing spikes (5) is or are placed on a substrate (18), in particular on the ground or on a lawn, and pressed into it.

15. Use according to claim 14, **characterised in that** a pin (14) is inserted into a plurality of through-openings (13) before or after the pressing.

16. Use according to one or both of the preceding claims 14 and 15, **characterised in that** at least two grids (2) having mutually adjacent, in particular having mutually abutting edges (7) are placed on the substrate (18) and **in that**, before or after the grid (2) is pressed in, staples (19) are pushed with one leg (20) into an opening (12) in one grid (2) and into the hollow channel (11) adjoining this opening (12) and with the other leg (20) into an opening (12) in the other grid (2) and into the hollow channel (11) adjoining this opening (2).

17. Method for laying a blocking device (1) according to one or more of the preceding claims, in particular to repel moles, wherein one or more grids (2) having downwardly pointing spikes (5) is or are placed on a substrate (18), in particular on the ground or on a lawn, and pressed into it.

18. Method according to claim 17, **characterised in that** a pin (14) is inserted into a plurality of through-openings (13) before or after the pressing.

19. Method according to one or both of claims 17 and 18, **characterised in that** at least two grids (2) having mutually adjacent, in particular having mutually abutting edges (7) are placed on the substrate (18) and **in that**, before or after the grid (2) is pressed in, staples (19) are pushed with one leg (20) into an opening (12) in one grid (2) and into the hollow channel (11) adjoining this opening (12) and with the other leg (20) into an opening (12) in the other grid (2) and into the hollow channel (11) adjoining this opening (2).

20. Method according to one or more of claims 17 to 19, **characterised in that** covering material such as soil is applied to the grids (2) after the grids (2) have been placed on the substrate (18), in particular after the grids (2) have been pressed into the substrate (18), the grids (2) in particular being completely covered by the covering material.

## Revendications

1. Dispositif de blocage (1), en particulier pour repousser des taupes, le dispositif de blocage (1) comprenant au moins une grille (2) qui présente des barres de grille (4) bordant des ouvertures de grille (3), des broches (5) étant adjointes à la grille (2), en particulier à des barres de grille (4), chaque broche (5) s'étendant transversalement, en particulier perpendiculairement, à la grille (2), **caractérisé en ce que** la largeur maximale des ouvertures de grille (3) est inférieure à 20 mm.

2. Dispositif de blocage (1) selon la revendication 1, **caractérisé en ce que** la grille (2) présente sur un bord latéral (7) de la grille (2) ou sur chacun d'une pluralité de bords latéraux (7) de la grille (2), en particulier sur tous, une barre de grille (4) à laquelle sont adjointes des broches (5) et/ou **en ce que** des broches (5) sont adjointes à des barres de grille (4) à des endroits d'adjonction (10) qui sont espacés de tous les bords latéraux (7) de la grille (2) et en particulier de toutes les barres de grille (4) s'étendant sur les bords latéraux (7) de la grille (2).

3. Dispositif de blocage (1) selon une ou plusieurs des revendications précédentes, **caractérisé en ce que** des broches (5) sont adjointes à des croisements (6) de barres de grille (4) qui sont agencées, en particulier, entre des bords latéraux (7) de la grille (2).

4. Dispositif de blocage (1) selon une ou plusieurs des revendications précédentes, **caractérisé en ce que** la grille (2) et les broches (5) sont réalisées d'un seul tenant, en particulier en matière plastique telle que du polyéthylène.

5. Dispositif de blocage (1) selon une ou plusieurs des revendications précédentes, **caractérisé en ce que** toutes les broches (5) sont agencées du même côté de la grille (2).

6. Dispositif de blocage (1) selon une ou plusieurs des revendications précédentes, **caractérisé en ce que** les broches (5) s'amincissent vers leur extrémité longitudinale libre respective (8).

7. Dispositif de blocage (1) selon une ou plusieurs des revendications précédentes, **caractérisé en ce que** la dimension maximale des barres de grille (4) dans chaque section transversale de barre, mesurée parallèlement à chaque direction s'étendant dans la section transversale de barre respective, est supérieure ou égale à 1 mm, en particulier supérieure ou égale à 3 mm.

8. Dispositif de blocage (1) selon une ou plusieurs des revendications précédentes, **caractérisé en ce qu'**au moins plusieurs, en particulier toutes les barres (4) de la grille (2) présentent, par rapport à leur section transversale de barre, un contour extérieur (22) polygonal, par exemple rectangulaire, carré, en forme de losange ou triangulaire.

9. Dispositif de blocage (1) selon une ou plusieurs des revendications précédentes, **caractérisé en ce que** la section transversale polygonale des barres de grille (4) se rétrécit en direction du côté de la grille sur lequel s'étendent les broches (5), avec une distance croissante par rapport au centre de la section transversale (M).

10. Dispositif de blocage (1) selon une ou plusieurs des revendications précédentes, **caractérisé en ce que** la grille (2) comprend une plaque (9) qui est percée par les ouvertures de grille (3), les ouvertures de grille (3) ayant des contours extérieurs ronds ou polygonaux.

11. Dispositif de blocage (1) selon une ou plusieurs des revendications précédentes, **caractérisé en ce qu'**au moins une partie des broches (5) ou que toutes les broches (5) ont un canal creux respectif (11) qui est traversant dans la direction longitudinale respective (8) de la broche (5), chaque canal creux (11) formant une ouverture de passage (13) avec une ouverture respective (12) dans la grille (2).

12. Dispositif de blocage (1) selon une ou plusieurs des revendications précédentes, **caractérisé en ce que** le dispositif comprend des chevilles (14), dans lequel chaque cheville (14) présente une tige (15) dont les dimensions en section transversale sont adaptées au dimensionnement de passage libre de l'ouverture de passage (13) pour faire passer la tige (15) à travers l'ouverture de passage (13) et dans lequel la longueur d'une tige respective (15) est supérieure à la longueur des ouvertures de passage (13).

13. Dispositif de blocage (1) selon une ou plusieurs des revendications précédentes, **caractérisé en ce que** le dispositif de blocage (1) comprend une pluralité de grilles (2) avec des broches (5) adjointes à chacune de celles-ci, dans lequel, en ce qui concerne chacune de ces grilles (2), au moins certaines des broches (5) qui y sont adjointes ou toutes les broches (5) qui y sont adjointes ont chacune un canal creux (11) qui est traversant dans la direction longitudinale respective (8) de la broche (5), et dans lequel chaque canal creux (11) forme une ouverture de passage (13) avec une ouverture respective (12) dans la grille (2), et **en ce que** le dispositif de blocage (1) comprend des crampons (19), dans lequel chaque crampon (19) présente deux branches (20) dont les dimensions en section transversale sont adaptées au dimensionnement de passage libre des ouvertures de passage (13) pour le passage de chaque branche (20) à travers une ouverture de passage respective (13) et dans lequel en particulier la longueur d'une branche respective (20) est supérieure à la longueur des ouvertures de passage (13).

14. Utilisation d'un dispositif de blocage (1) selon une ou plusieurs des revendications précédentes, en particulier pour repousser des taupes, **caractérisée en ce qu'**une ou plusieurs grilles (2) avec des broches (5) dirigées vers le bas, sont mises en place sur un support (18), en particulier sur un sol ou sur une pelouse, et y sont enfoncées.

15. Utilisation selon la revendication 14, **caractérisée en ce qu'**une cheville (14) est insérée dans une pluralité d'ouvertures de passage (13) avant ou après enfoncement.

16. Utilisation selon l'une ou les deux revendications précédentes 14 et 15, **caractérisée en ce que** sont mis en place sur le support (18) au moins deux grilles (2) avec des bords (7) mutuellement adjacents, en particulier mutuellement contigus, et **en ce que**, avant ou après enfoncement des grilles (2), des crampons (19) sont insérés avec une de leurs branches (20) dans une ouverture (12) d'une grille (2) et dans le canal creux (11) se raccordant à cette ouverture (12) et avec leur autre branche (20) dans une ouverture (12) dans l'autre grille (2) et dans le canal creux (11) se raccordant à cette ouverture (2).

17. Procédé de pose d'un dispositif de blocage (1) selon une ou plusieurs des revendications précédentes, en particulier pour repousser des taupes, dans lequel une ou plusieurs grilles (2) avec des broches (5) dirigées vers le bas, sont placées sur un support (18), en particulier sur un sol ou sur une pelouse, et y sont enfoncées.

18. Procédé selon la revendication 17, **caractérisé en ce qu'**une cheville (14) est insérée dans une pluralité d'ouvertures traversantes (13) avant ou après enfoncement.

19. Procédé selon l'une ou les deux revendications 17 et 18, **caractérisé en ce qu'**au moins deux grilles (2) avec des bords (7) mutuellement adjacents, en particulier mutuellement contigus, et **en ce que**, avant ou après enfoncement des grilles (2), des crampons (19) sont insérés avec une de leurs branches (20) dans une ouverture (12) d'une grille (2) et dans le canal creux (11) se raccordant à cette ouverture (12) et avec leur autre branche (20) dans une ouverture (12) dans l'autre grille (2) et dans le canal creux (11) se raccordant à cette ouverture (2).

20. Procédé selon une ou plusieurs des revendications 17 à 19, **caractérisé en ce qu'**un matériau de recouvrement tel que de la terre est appliqué sur les grilles (2) après que les grilles (2) ont été placées sur le substrat (18), en particulier après que les grilles (2) ont été enfoncées dans le substrat (18), dans lequel les grilles (2) sont recouvertes, en particulier complètement, par le matériau de recouvrement.
